# EUROPEAN PATENT SPECIFICATION

(11) **EP 4 018 147 B1**
(45) Date of publication and mention of the grant of the patent: **18.02.2026**
(21) Application number: 20743534.8
(22) Date of filing: 02.07.2020
(51) Int. Cl.: F28D 20/02, F28F 21/04, F28D 20/00

(54) **ENERGY STORAGE DEVICE**
ENERGIESPEICHERVORRICHTUNG
DISPOSITIF DE STOCKAGE D'ÉNERGIE

(30) Priority: 22.08.2019 US 201916547950
(43) Date of publication of application: 29.06.2022
(73) Proprietor: Westinghouse Electric Company LLC, Cranberry Township, PA 16066 (US)
(72) Inventor: STANSBURY, Cory A., Gorham, Maine 04038 (US); RENAUD, Edward C., Cabot, PA 16023 (US)
(74) Representative: Novagraaf Group
(86) International application number: PCT/US2020/040706
(87) International publication number: WO 2021/034417

(56) References cited:
- EP-A2- 2 017 561
- WO-A1-2010/051682
- WO-A1-2014/026559
- WO-A1-2016/065191
- WO-A1-2018/077842
- WO-A2-2011/079936
- DE-A1- 102011 007 335
- US-A1- 2018 372 423

## Description

### BACKGROUND

### Field

This invention pertains generally to energy storage and, more particularly, to a modular, low cost, thermal energy storage device.

### Related Art

The creation of energy storage to levelize power on the electrical grid, avoiding the need for large amounts of spinning reserve, has been an extreme challenge. Due to an ever increasing roll-out of non-dispatchable renewable energy devices, like solar photovoltaic cells and wind turbines, grid stability has suffered. Traditional energy storage solutions, such as pumped storage and batteries, have either exhausted their capacity or are prohibitively difficult to cite due to environmental concerns. By storing energy as heat, either from a heat pump arrangement or from the sources of heat used to generate electricity, created just prior to the generation of electricity, rather than the storing of electricity, relatively low-cost storage may be achieved and utilized by a reactor in a nuclear power plant. Thermal storage in and of itself is not new, but what has been elusive is a design that can efficiently store energy in relatively low-cost modules using common materials, rather than expensive salts or geologic formations, which may not exist everywhere.
Relevant prior art is found in documents WO 2016/065 191A, WO 2010/051 682 A1,
DE 10 2011 007 335 A1, WO 2018/077 842 A1, and EP 2 017 561 A2. The prior art of document WO 2016/065 191 A1 forms the basis of the pre-characterizing portion of independent claim 1.
It is an object of this invention to provide a low-cost, modular energy storage device that is constructed from common, easily acquired materials.

### SUMMARY

According to a first aspect of the invention, there is provided an energy storage device that comprises: a plurality of separate plates, each of the plates having a first surface and an opposite second surface, the first surface having a plurality of grooves formed therein; an inlet plenum configured to receive a heat transfer medium from a source and distribute the heat transfer medium through the grooves; and an outlet plenum configured to receive the heat transfer medium from the grooves and dispense the heat transfer medium to a return destination. Each groove extends from a first edge of a respective plate of the plurality of separate plates disposed closer to the inlet plenum to an opposite second edge disposed closer to the outlet plenum. Each plate is formed from a concrete material. The second surface has no grooves formed therein or a second plurality of grooves formed therein. The first surface of a first plate of the plurality of separate plates is disposed in direct contact with the second surface of an adjacent second plate of the plurality of plates to define a plurality of flow paths between the first plate and the second plate for the heat transfer medium, wherein piping is excluded from the flow paths. A portion of heat in the heat transfer medium is transferred to the plates in a charging mode of operation when the heat transfer medium is passed along the grooves or a portion of heat in the plates is transferred to the heat transfer medium in a discharging mode of operation when the heat transfer medium is passed along the grooves. Each groove is generally shaped like a circular segment when viewed along each groove.

Each plate may be formed from a high specific heat material. The plurality of separate plates may be arranged in a vertical stack with the first surfaces and the second surfaces disposed horizontally. The plurality of separate plates may be arranged vertically on edge, with the first surfaces and the second surfaces disposed vertically. Each plate may have a thickness between about 12,5 mm (0.5 inches) and about 150 mm (6 inches). Each plate may have a thickness of about 100 mm (4 inches). Each groove may have a depth of about 6,25 mm (0.25 inches) to about 25 mm (1 inch). Each groove may have a width of about 12,5 mm (0.5 inches) to about 62,5 mm (2.5 inches) and may be separated from adjacent grooves by a separation distance of about 6,26 mm (0.25 inches) to about 50 mm (2 inches). The device may be configured to operate approximately between 60 °C (140° F) and 315 °C (600° F). The plates may comprise micro rebar or other similar three dimensional reinforcement.

According to a second aspect, the invention further contemplates a method of storing thermal energy comprising the steps of: forming an energy storage device according to the above first aspect; directing a heat transfer medium from the inlet plenum through the plurality of grooves of the plurality of separate plates to the outlet plenum; transferring heat from the heat transfer medium to the plurality of separate plates in a charging mode of operation or transferring heat from the plurality of separate plates to the heat transfer medium is a discharging mode of operation; and exiting the heat transfer medium from the outlet plenum.

The method may include the step of operating the heat transfer module approximately between 60 °C (140° F) and 3125 °C (600° F). The charging mode of operation, in which heat is transferred from the heat transfer medium to the plurality of separate plates, and the discharging mode of operation, in which heat is transferred from the plurality of separate plates to the heat transfer medium, may respectively be performed in opposite fluid flow directions, equivalent to a counter-flow heat exchanger's operation.

These and other objects, features, and characteristics of the present invention, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention.

### BRIEF DESCRIPTION OF THE DRAWINGS

A further understanding of the invention can be gained from the following description of the preferred embodiments when read in conjunction with the accompanying drawings in which:
Figure 1 is a simplified perspective view of a portion of the housing of an energy storage device in accordance with one example embodiment of the present invention showing several of plates in position with the flow space there between;
Figure 2 shows a cutaway view of an entire module of an energy storage device in accordance with one example embodiment of the present invention including an intake plenum and all of the plates that show the thermal breaks;
Figure 3 is a simplified perspective view of one of the plates of the arrangements of Figures 1 or 2;
Figure 4 is a simplified perspective view of an entire assembled energy storage device housing in accordance with one example embodiment of the present invention;
Figure 5 is a simplified perspective view of the outer elongated shell of Figures 1, 2 and 4 that extends the longitudinal extent of the housing, with the plate holders shown in a position that would support the plates horizontally;
Figure 6 is a simplified perspective view of one end cap that closes off one end of the shell shown in Figure 5;
Figure 7 is a simplified perspective view of a second end cap that closes off the second end of the shell shown in Figure 5 and is a mirror image of the one end cap shown in Figure 6;
Figure 8 is a partially schematic, simplified perspective view of another energy storage device utilizing another arrangement of plates in accordance with another example embodiment of the present invention shown disposed within a housing (shown in hidden line);
Figure 9 is a simplified perspective view of one of the plates of the arrangement of Figure 8;
Figure 10 is a simplified elevation view of an end of the arrangement of plates of Figure 8; and
Figure 11 is an enlarged view of a portion of the elevation view of Figure 10 as indicated in Figure 10.

### DETAILED DESCRIPTION OF EXEMPLARY EMBODIMENTS

Embodiments of the present invention provide arrangements and methods for storing thermal energy in a modular way using low cost materials.

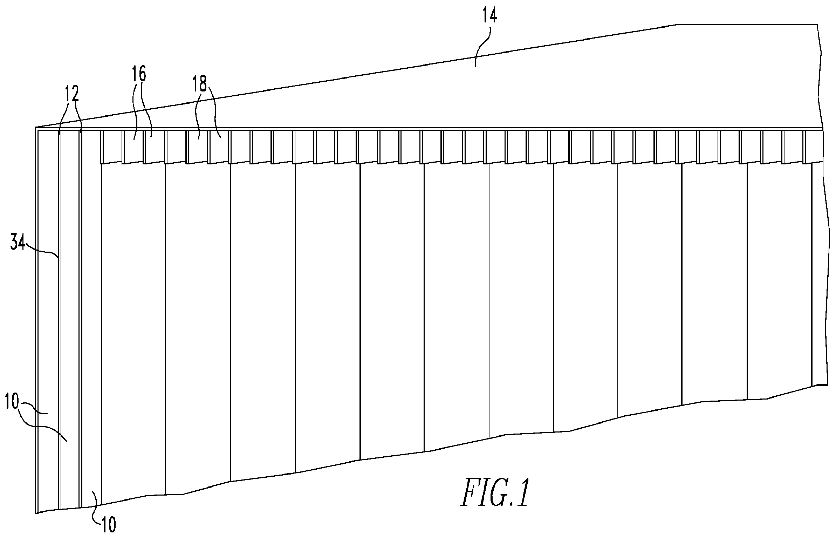

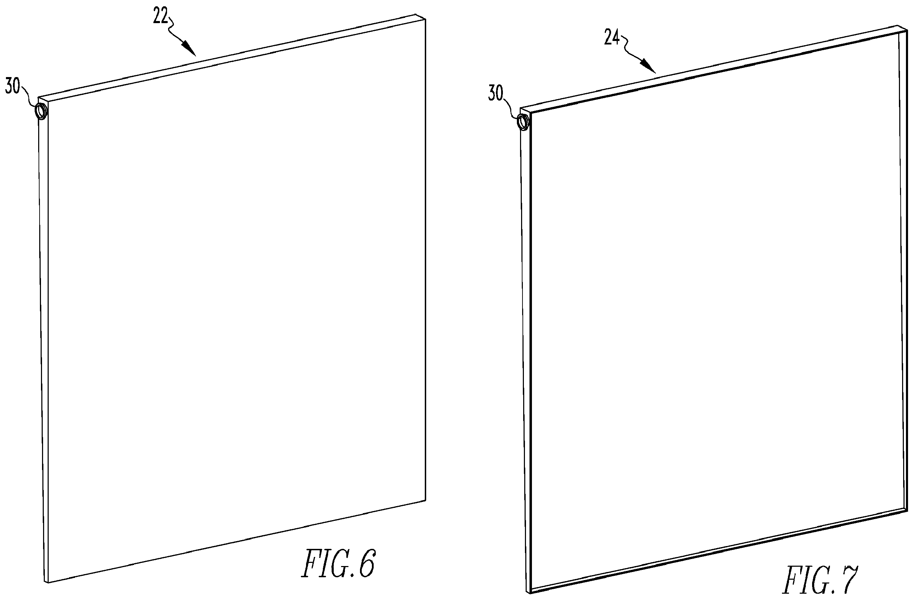

One example approach in accordance with the present invention is shown in Figures 1-7. In such first example, thermal energy storage is carried out by aligning a plurality of plates 10 (shown in Figures 1, 2 and 3). Each plate 10 is of a thin cross section and formed from a high specific heat material. As used herein, a "high specific heat material" is a material having a heat capacity of at least 0.75 kJ/kg-K. Some examples of suitable high specific heat materials which have been employed in embodiments of the present invention include concrete, high performance concrete, ultra-high-performance concrete, high-strength concrete, and high-temperature concrete. Concretes including phase change materials, thermochemical materials, and/or high quantities of fly ash may also be employed. Such concrete materials provide for strong plates with a high heat capacity that can readily be formed from readibly obtainable low cost materials. Some other examples of high specific heat materials from which plates 10 may constructed from firebrick, ceramic, solid salt or metals.

Plates 10 are positioned in close proximity to one another, with flow channels 12 formed between the plates 10. The plates 10 are then assembled in a low-cost metal module housing shell 14 with built-in guide slots 16 formed between adjacent separators 18, which maintain the spacing between the plates 10 that form the flow channels 12. Alternatively, separators which may be affixed to the plates 10 or cast in to the plates 10 may be utilized to space the concrete plates. The shell 14 is assembled and then two end caps 22 and 24 are positioned respectively at each end to the shell 14 and are affixed to shell 14, such as by welding, thus forming a plenum 26 between each of the ends of the plates 10 and each of the respective end caps 22 and 24. Sitting horizontally, the two plenums 26 and the channels 12 enable a heat transfer fluid (oil, salt, etc.) to be circulated among the plates 10, transferring energy to the plates 10 in a thermal gradient which will move down the length of the assembly as the "charge level" increases. When heat is to be extracted, the flow will be reversed, allowing the device to operate like a counter-flow heat exchanger. It is to be appreciated that the plenums 26 illustrated are shown for example purposes only and that one or more of the shape, size, inlet size, placement, quantity, etc. may be varied without varying from the scope of the present invention.

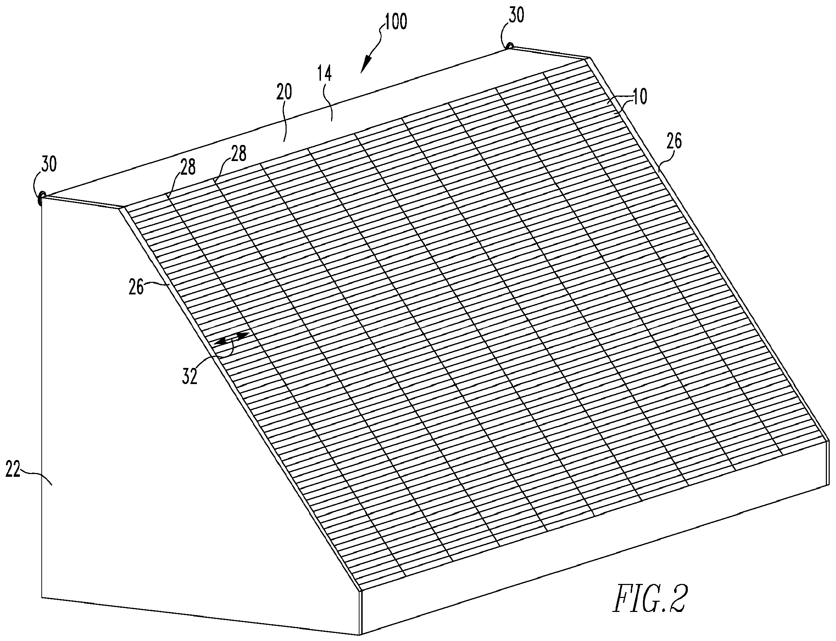

Each of the plates 10 may be fluted, i.e., grooved in the vertical direction (i.e., perpendicular to the flow direction) substantially along the entire height of the concrete plate 10, at each given distance along the length of the plate 10 to reduce the effect of a heat wave moving down the plate 10 when the heat transfer fluid is not flowing. The given distance is preferably six inches to four feet, but can be longer, depending on the length of the module 100 (Figure 2). The flutes 28 can be clearly observed in Figure 2. Alternatively, smaller, separate plates 10 can be used with the breaks between adjacent plates 10 functioning in a similar manner as flutes 28. Additionally, such smaller plates generally provide for easier assembly.

Thin strips of material, including but not limited to insulating materials, figuratively represented in Figure 1 by reference character 34, can also extend from one plenum to the other along the center of the flow channels 12 in order to tie the structure together and maintain plate spacing, while not negatively impacting performance characteristics. Insulation can also be embedded in the flutes 28 or replace the flutes altogether and tie adjacent sections of the heat transfer plates together. Though the plates 10 are shown extending in the horizontal direction it should be appreciated that they could be configured, alternately, to extend in the vertical direction and still be within the scope of this invention, though the horizontal flow path is preferred due to lesser static pressures in equivalent embodiments.

Accordingly, one embodiment of this invention employs a concrete structure formed from a plurality of plates 10 encased in a housing 20 (i.e., shell 14 and end caps 22 and 24) with a large surface to area ratio for storing thermal energy from a heat source such as a nuclear reactor or a heat pump. Preferably, the plates 10 are formed from a concrete material and include micro-rebar or other similar admixture to enhance strength, durability, and heat transfer. Alternatives to micro-rebar include steel, steel fibers, fiberglass, carbon fiber, other metals, composites and high temperature plastics. No piping need be utilized, but metal tubing or composite tubing may be employed as an alternative to the foregoing preferred channel structure. All of the heat transfer medium within the module is directed by a metal casing or relatively thin concrete plates employed within the casing to store the heat.

Flow channels for the heat transfer medium or fluid are formed between adjacent plates 10, maximizing surface area and minimizing the conduction distance and pumping power needed to drive the heat transfer medium. The separators 18 may be thin material strips, rods or bars and may be constructed out of high temperature plastic, metal, composites or fiberglass. Preferably, the heat transfer medium is unpressurized and comprised of an oil or salt with suitable properties as to not negatively interact with the concrete or metal structure, which can be treated with a protective coating to deter such an interaction. The heat transfer medium may be hydrocarbon based fluid such as Therminol, Duratherm HF, Calder 1, Mobiltherm, Paratherm, Dowtherm or Phillips 66, a silicone based fluid such as Duratherm S or Syltherm or a liquid salt such as Nitrate salts.

In one embodiment, the plates 10 are fluted along their height, i.e., perpendicular to the flow of the heat transfer medium, as to provide thermal breaks, slowing thermal diffusion between plates 10 following a partial charge, i.e., a transfer of heat from the heat transfer medium to the plates 10 that only partially fills the capacity of the plates 10 to store the heat. The thermal breaks impede the plates 10 from equalizing the temperature across the plates, which otherwise, after a partial charge, would prevent a high quality recovery of the heat during a discharge. In another embodiment, separate smaller plates are used, with the separations between adjacent plates providing thermal breaks.

The housing 14 may be formed from plastic, coated carbon steel, stainless steel, composites or fiberglass and is preferably provided with insulation either layered within, around the inside or around the outside of the housing. The insulation may be an air gap in a multi-layered shell, fiberglass, foam glass, Aerogel, ceramics, mineral fiber/wool or silica.

The energy storage device of FIGS. 1-7 may be operated with the plates 10 in either a horizontal or vertical orientation. Additionally, the shell 14, end caps 22 and 24 and the plates 10 may be constructed at the site of use, or the fully constructed housings 14 and the plates 10 may be shipped separately and assembled on site, or any combination thereof.

Thermal energy will be loaded and unloaded from the fluted structure using a moving thermal gradient along the long axis of the plates 10. Temperatures of operation will be as low as 60 °C (140° F) and as high as 315 °C (600° F). Charging and discharging operation will occur with opposite fluid flow direction as to resemble a counter-flow heat exchanger's operation. Micro rebar or similar admixture may be used in place of traditional concrete reinforcement, as to minimize manual labor and maximize production efficiency.

Preferably, the pressure of the incoming heat transfer medium is at atmospheric pressure or slightly above; that is 100 to 150 kPa (14.5 to 21.8 psia). The flow rate of the heat transfer medium, desirably, is approximately between 0-10 kg/s (0-22.0 lbs/s) and, preferably, about 1,8 kg/s (4 lbs/s) per module. The plates 10 are approximately between 12,5-150 mm (0.5-6 inches) thick and, more preferably, about 100 mm (4 inches) thick. The flow spaces are about between 1 mm (0.04 inches) and 12,5 mm (0.5 inches) and, more preferably, about 10 mm (0.4 inch) wide.

Figure 1 shows the shell 14 with three of the plates 10 spaced by the modular guide slots 16 extending from the underside of the upper wall of the shell 14 portion of the housing 20, to form the flow spaces or channels 12 between the plates 10. The fluting 28 is shown as grooves extending vertically, however, the flow of the heat transfer medium preferably extends horizontally, in parallel through the flow spaces over substantially the entire faces of the plates 10; however, it should be appreciated that the flow may also be directed vertically with a plenum on the top and bottom of the module instead of on the ends.

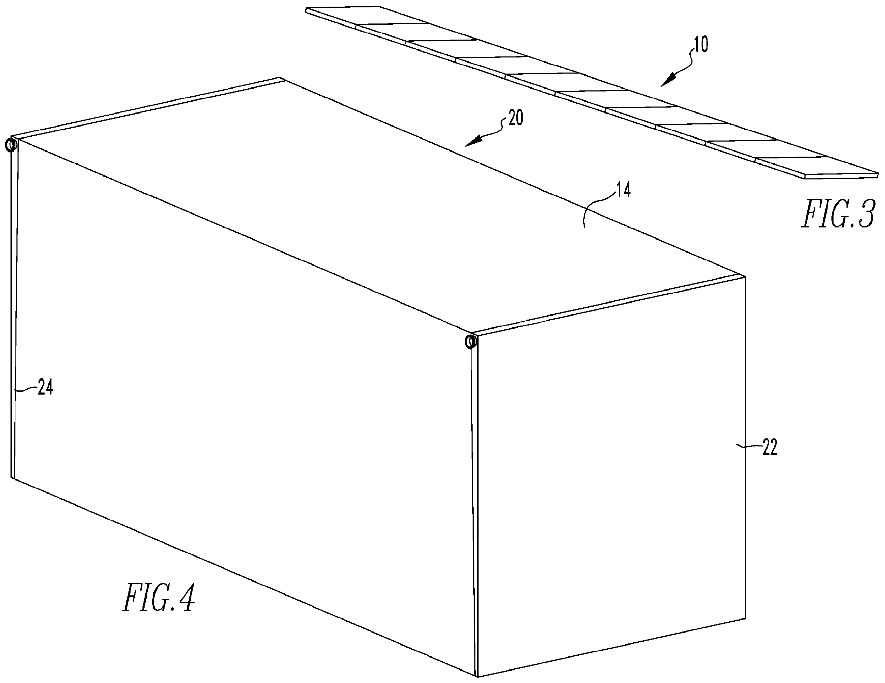

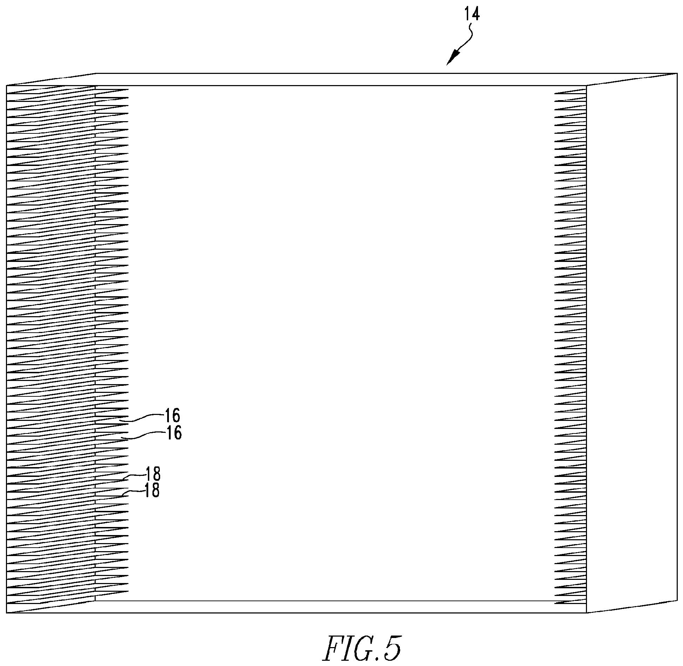

Figure 2 shows a cutaway of a whole module 100 including all of the plates 10 with a plenum 26 on either end of the elongated dimension of the plates 10, with the plenum on the left side being more visible and having an inlet or outlet nozzle 30 shown in the upper left corner of the module 100. It does not make any difference if the plenum 26 on the right or the one on the left is the inlet plenum or outlet plenum, because the heat transfer medium, indicated by the double headed arrow 32 in Figure 2, will be flowing in both directions, one direction to charge the plates 10 and the opposite direction to discharge heat from the concrete plates. Figure 3 is a perspective view of one of the plates 10. Figure 4 shows a perspective view of the housing components assembled and Figures 5, 6 and 7 shows perspective views of the housing components disassembled.

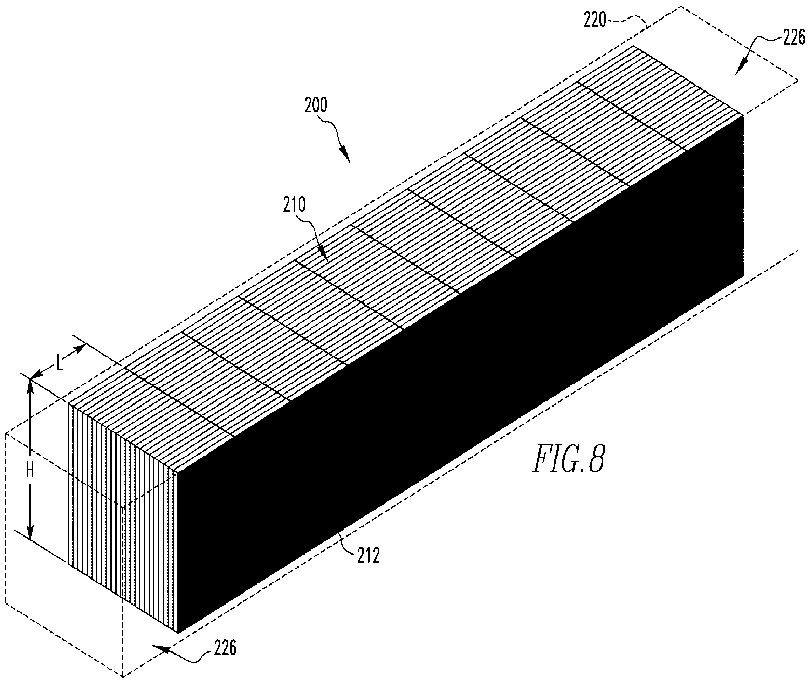

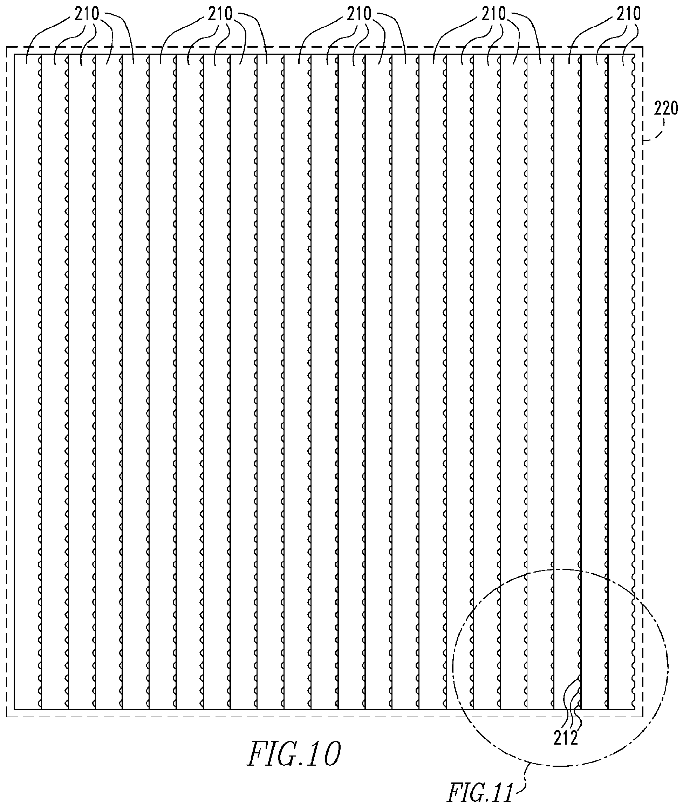

Referring now to Figures 8-11, another embodiment of an energy storage device 200 in accordance with another example embodiment of the present invention will now be discussed. Similar to the arrangement previously discussed in regard to Figures 1-7, device 200 employs a plurality of plates 210 of similar material construction as plates 10 previously discussed, positioned within a low-cost metal module housing shell 220 (shown schematically in hidden line in Figure 8) such that plenums 226 are formed at either end of the device 200. Unlike the arrangement previously discussed which relied upon spacing plates 10 apart in order to form flow channels 12, the arrangement shown in Figures 8-11 utilizes a plurality of grooves 212 that are formed in each of plates 210 for creating the flow paths for a heat transfer fluid (e.g., oil, salt, etc.) to be circulated among the plates 210. Each groove 212 extends from a first edge (not numbered) of a respective plate 210 disposed near a first one of plenums 226 to an opposite second edge (not numbered) disposed closer to the opposite second one of plenums 226. As shown in the example embodiment illustrated in Figures 8-11, each groove 212 may extend in a straight line across each plate 210. Alternatively, one or more of grooves 212 may extend in a non-straight manner (e.g., curved, serpentine, zig-zag, etc.) without varying from the scope of the present invention.

As grooves 212 serve as flow paths for the heat transfer fluid, plates 210 are preferably disposed in direct contact with each other and thus may be readily arranged on edge, such as shown in Figure 8 (similar to books on a bookshelf), or lying flat in a stack. In one example embodiment, the grooves 212 are cast as a feature of each plate 210 during formation of the plate 210 itself; however, it is to be appreciated that such grooves 212 may be formed via any other suitable method and/or at a later time without varying from the scope of the present invention. It is also to be appreciated that although in the illustrated embodiment such grooves 212 are formed only in one surface of each plate 210, such grooves may be formed in more than one surface (e.g., opposite facing surfaces) without varying from the scope of the present invention.

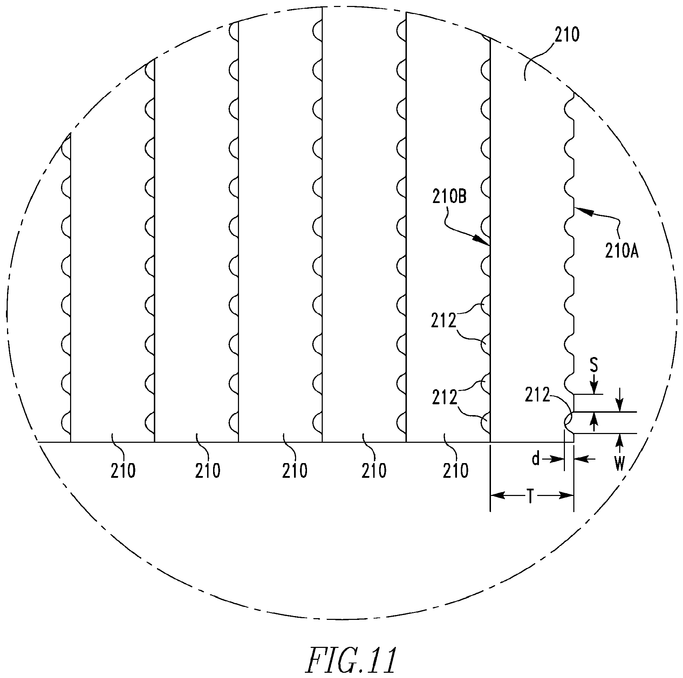

In the example embodiment shown in the detail view of Figure 11, each groove 212 is generally shaped like a circular segment when viewed along each groove. Preferably, the edges of each groove are radiused or chamfered so as to minimize stress concentrations. Continuing to refer to Figure 11, each groove 212 extends inward a depth d from a first surface 210A of each plate 210 toward an opposite second surface 210B, with the first and second surfaces 210A, 210B generally defining a thickness T of each plate 210 and adjacent grooves being spaced apart a separation distance S. In example embodiments of the present invention plates 210 having a thickness T generally between 12,5 mm and 150 mm (0.5 and 6 inches) have been employed, although other thicknesses may be employed without varying from the scope of the present invention. In such embodiments, grooves having depths d of from about 6,25 mm (0.25 inches) to about 25 mm (1 inch), widths W of about 12,5 mm (0.5 inches) to about 62,5 mm (2.5 inches), and separation distances S of about 6,25 mm (0.25 inches) to about 50 mm (2 inches) have been employed, however, it is to be appreciated that other dimensions may be employed without varying from the scope of the present invention. It is also to be appreciated that grooves of other shapes may be employed without varying from the scope of the present invention.

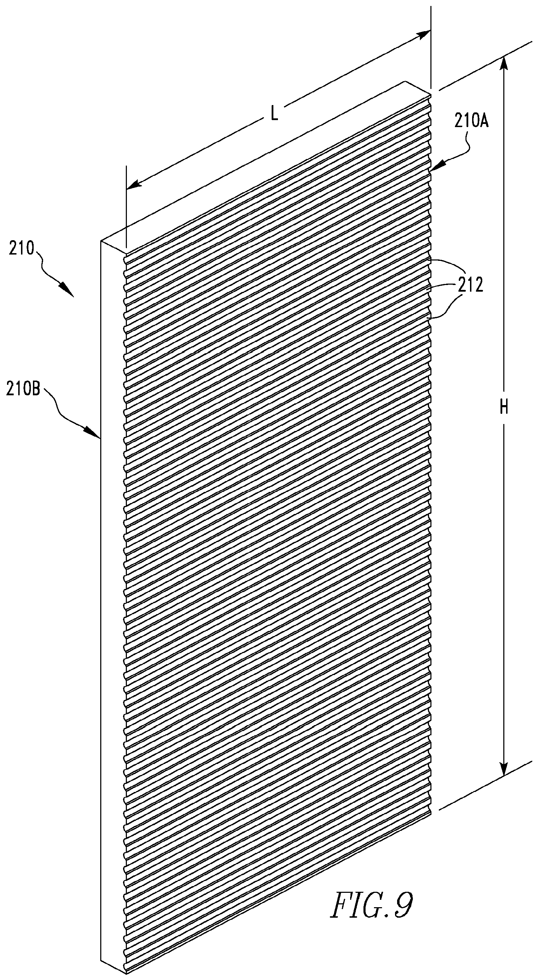

Referring to Figures 8 and 9, each plate 210 extends a length L, in a direction between the opposite edges between which the grooves 212 extend, and a height H in a direction generally perpendicular to the direction in which the grooves 212 extend. In example embodiments of the present invention, plates 210 having a length L of about 600 mm (2 feet) to about 1200 mm (4 feet) and a height of about 2400 mm (8 feet) to about 2750 mm (9 feet) have been employed, however, plates 210 of other dimensions may be employed without varying from the scope of the present invention. The plurality of plates 210 utilized in energy storage device 200 illustrated in Figure 8 are arranged in 10 rows, with each row having 23 plates. It is to be appreciated that one or both of the quantity of rows and/or plates per row may be varied without varying from the scope of the present invention.

It is to be appreciated that embodiments of the present invention eliminate the need for metal piping within the module. The metal casing which is part of the functional unit, enables easy attachment of a simple plenum to each end of the flow spaces. The module utilizes the beneficial thermal properties of concrete, i.e., specific heat, durability, low-cost, ready availability, etc. The module requires only relatively low pumping power to move the heat transfer medium due to the sizing of the flow spaces between the concrete plates (and/or the grooves formed in the plates) and low velocities. The large wetted area provided by designs in accordance with the present concept helps offset the heat transfer challenge posed by many materials of high specific heat and provides for a short energy deposition along the axis of flow; thus supporting creation of a thermal gradient. The horizontal flow arrangement permits a longer thermal gradient distance without incurring a significant amount of static head pressure from the fluid. The horizontal flow arrangement also permits easy inlet and outlet piping attachment and unit replacement. The horizontal arrangement also permits ease of adding "thermal breaks" by simply fluting the concrete, i.e., adding vertical grooves to the concrete, or by using separate sections of concrete. This concept further eliminates the traditional use of labor intensive rebar for reinforcement.

The heat for heating the heat transfer fluid or medium can be derived from a heat exchanger in heat exchange relationship with the primary or secondary loop of a nuclear reactor, coal plant, solar-thermal or other similar heat source. Alternately, the heat can be derived from a gas turbine cycle or from a heat pump.

Accordingly, embodiments of the present invention provide the most economical energy storage currently available outside of pumped hydro or compressed air into a compatible geologic formation and does not have siting restrictions. The invention may utilize pre-existing equipment for a heat source, such as a nuclear power plant, inexpensive materials, and a simple design to solve a much grander challenge that has existed for some time without being practically addressed on a large commercial scale. The invention does not require a pressurized environment and presents a reduced risk of catastrophic safety events.

While specific embodiments of the invention have been described in detail, it will be appreciated by those skilled in the art that various modifications and alternatives to those details could be developed in light of the overall teachings of the disclosure. Accordingly, the particular embodiments disclosed are meant to be illustrative only and not limiting as to the scope of the invention which is given by the appended claims.

## Claims

1. An energy storage device comprising:
a plurality of separate plates (10), wherein each of the plates (10) has a first surface and an opposite second surface, wherein the first surface has a first plurality of grooves (28) formed therein, and wherein
an inlet plenum (26) configured to receive a heat transfer medium from a source and distribute the heat transfer medium through the grooves (28); and
an outlet plenum (26) configured to receive the heat transfer medium from the grooves (28) and dispense the heat transfer medium to a return destination,
wherein each groove (28) extends from a first edge of a respective plate (10) of the plurality of separate plates (10) disposed closer to the inlet plenum (26) to an opposite second edge disposed closer to the outlet plenum (26),
each plate (10) is formed from a concrete material,
and the second surface has:
no grooves formed therein; or
a second plurality of grooves (28) formed therein;
wherein the first surface of a first plate (10) of the plurality of separate plates (10) is disposed in direct contact with the second surface of an adjacent second plate (10) of the plurality of separate plates (10) to define a plurality of flow paths (12) between the first plate (10) and the second plate (10) for the heat transfer medium, wherein piping is excluded from the flow paths (12); and
wherein a portion of heat in the heat transfer medium is transferred to the plates (10) in a charging mode of operation when the heat transfer medium is able to be passed along the grooves (28) or a portion of heat in the plates (10) is able to be transferred to the heat transfer medium in a discharging mode of operation when the heat transfer medium is passed along the grooves (28);
**characterized in that**
each groove (28) is generally shaped like a circular segment when viewed along each groove (28).

2. The energy storage device of claim 1, wherein the plurality of separate plates (10) is arranged in a vertical stack with the first surfaces and the second surfaces disposed horizontally.

3. The energy storage device of claim 1, wherein the plurality of separate plates (10) is arranged vertically on edge, with the first surfaces and the second surfaces disposed vertically.

4. The energy storage device of claim 1, wherein each plate (10) has a thickness between about 12,5 mm (0.5 inches) and about 150 mm (6 inches).

5. The energy storage device of claim 4, wherein each plate (10) has a thickness of about 100 mm (4 inches).

6. The energy storage device of claim 1, wherein each groove (28) has a depth of about 6,25 mm (0.25 inches) to about 25 mm (1 inch).

7. The energy storage device of claim 6, wherein each groove (28) has a width of about 12,5 mm (0.5 inches) to about 62,5 mm (2.5 inches) and is separated from adjacent grooves (28) by a separation distance of about 6,25 mm (0.25 inches) to about 50 mm (2 inches).

8. The energy storage device of claim 1 wherein the energy storage device is configured to operate approximately between 60°C (140° F) and 315°C (600° F).

9. The energy storage device of claim 1 wherein the plates (10) comprise micro rebar or other three dimensional reinforcement.

10. A method of storing thermal energy, comprising:
forming an energy storage device according to claim 1;
directing a heat transfer medium from the inlet plenum (26) through the plurality of grooves (28) of the plurality of separate plates (10) to the outlet plenum (26);
transferring heat from the heat transfer medium to the plurality of separate plates (10) in a charging mode of operation or transferring heat from the plurality of separate plates (10) to the heat transfer medium is a discharging mode of operation; and
exiting the heat transfer medium from the outlet plenum (26).

11. The method of claim 10 including the step of operating the heat transfer module approximately between 60°C (140° F) and 315°C (600° F).

12. The method of claim 10 wherein the charging mode of operation, in which heat is transferred from the heat transfer medium to the plurality of separate plates (10), and the discharging mode of operation, in which heat is transferred from the plurality of separate plates (10) to the heat transfer medium, are respectively performed in opposite fluid flow directions, equivalent to a counter-flow heat exchanger's operation.

## Patentansprüche

1. Energiespeichervorrichtung, umfassend:
eine Vielzahl von separaten Platten (10), wobei jede der Platten (10) eine erste Oberfläche und eine gegenüberliegende zweite Oberfläche aufweist, wobei die erste Oberfläche eine erste Vielzahl von Rillen (28) aufweist, die darin eingeformt sind, und wobei
ein Einlassplenum (26) konfiguriert ist, um ein Wärmeübertragungsmedium von einer Quelle aufzunehmen und das Wärmeübertragungsmedium durch die Rillen (28) zu verteilen; und
ein Auslassplenum (26), das konfiguriert ist, um das Wärmeübertragungsmedium aus den Rillen (28) aufzunehmen und das Wärmeübertragungsmedium zu einem Rücklaufziel abzugeben,
wobei sich jede Rille (28) von einer ersten Kante einer jeweiligen Platte (10) aus der Vielzahl von separaten Platten (10), die näher zu dem Einlassplenum (26) angeordnet ist, zu einer gegenüberliegenden zweiten Kante erstreckt, die näher zu dem Auslassplenum (26) angeordnet ist,
jede Platte (10) aus einem Betonmaterial geformt ist,
und die zweite Oberfläche:
keine darin eingeformten Rillen hat; oder
eine zweite Vielzahl von Rillen (28) hat, die darin eingeformt sind;
wobei die erste Oberfläche einer ersten Platte (10) aus der Vielzahl von separaten Platten (10) in direktem Kontakt mit der zweiten Oberfläche einer benachbarten zweiten Platte (10) aus der Vielzahl von separaten Platten (10) angeordnet ist, um eine Vielzahl von Strömungswegen (12) zwischen der ersten Platte (10) und der zweiten Platte (10) für das Wärmeübertragungsmedium festzulegen, wobei Rohrleitungen von den Strömungswegen (12) ausgeschlossen sind; und
wobei ein Abschnitt der Wärme in dem Wärmeübertragungsmedium auf die Platten (10) in einem Ladebetriebsmodus übertragen wird, wenn das Wärmeübertragungsmedium entlang der Rillen (28) geleitet werden kann oder ein Abschnitt der Wärme in den Platten (10) auf das Wärmeübertragungsmedium in einem Entladebetriebsmodus übertragen werden kann, wenn das Wärmeübertragungsmedium entlang der Rillen (28) geleitet wird;
**dadurch gekennzeichnet, dass**
jede Rille (28) im Allgemeinen wie ein Kreissegment geformt ist, wenn sie entlang jeder Rille (28) betrachtet wird.

2. Energiespeichervorrichtung nach Anspruch 1, wobei die Vielzahl von separaten Platten (10) in einem vertikalen Stapel angeordnet ist, wobei die ersten Oberflächen und die zweiten Oberflächen horizontal angeordnet sind.

3. Energiespeichervorrichtung nach Anspruch 1, wobei die Vielzahl von separaten Platten (10) vertikal auf der Kante angeordnet ist, wobei die ersten Oberflächen und die zweiten Oberflächen vertikal angeordnet sind.

4. Energiespeichervorrichtung nach Anspruch 1, wobei jede Platte (10) eine Dicke zwischen etwa 12,5 mm (0,5 Zoll) und etwa 150 mm (6 Zoll) aufweist.

5. Energiespeichervorrichtung nach Anspruch 4, wobei jede Platte (10) eine Dicke von etwa 100 mm (4 Zoll) aufweist.

6. Energiespeichervorrichtung nach Anspruch 1, wobei jede Rille (28) eine Tiefe von etwa 6,25 mm (0,25 Zoll) bis etwa 25 mm (1 Zoll) aufweist.

7. Energiespeichervorrichtung nach Anspruch 6, wobei jede Rille (28) eine Breite von etwa 12,5 mm (0,5 Zoll) bis etwa 62,5 mm (2,5 Zoll) aufweist und von benachbarten Rillen (28) durch einen Trennabstand von etwa 6,25 mm (0,25 Zoll) bis etwa 50 mm (2 Zoll) getrennt ist.

8. Energiespeichervorrichtung nach Anspruch 1, wobei die Energiespeichervorrichtung konfiguriert ist, um etwa zwischen 60 °C (140 °F) und 315 °C (600 °F) zu arbeiten.

9. Energiespeichervorrichtung nach Anspruch 1, wobei die Platten (10) Mikrobewehrung oder eine andere dreidimensionale Verstärkung umfassen.

10. Verfahren zum Speichern von Wärmeenergie, umfassend:
Bilden einer Energiespeichervorrichtung nach Anspruch 1;
Leiten eines Wärmeübertragungsmediums von dem Einlassplenum (26) durch die Vielzahl von Rillen (28) aus der Vielzahl von separaten Platten (10) zu dem Auslassplenum (26);
Übertragen von Wärme von dem Wärmeübertragungsmedium auf die Vielzahl von separaten Platten (10) in einem Ladebetriebsmodus oder Übertragen von Wärme von der Vielzahl von separaten Platten (10) auf das Wärmeübertragungsmedium in einem Entladebetriebsmodus; und
Entlassen des Wärmeübertragungsmediums aus dem Auslassplenum (26).

11. Verfahren nach Anspruch 10, einschließlich des Schrittes des Betreibens des Wärmeübertragungsmoduls bei etwa zwischen 60 °C (140 °F) und 315 °C (600 °F).

12. Verfahren nach Anspruch 10, wobei der Ladebetriebsmodus, in dem Wärme von dem Wärmeübertragungsmedium auf die Vielzahl von separaten Platten (10) übertragen wird, und der Entladebetriebsmodus, in dem Wärme von der Vielzahl von separaten Platten (10) auf das Wärmeübertragungsmedium übertragen wird, jeweils in entgegengesetzten Fluid-Strömungsrichtungen durchgeführt werden, entsprechend dem Betrieb eines Gegenstromwärmetauschers.

## Revendications

1. Dispositif de stockage d'énergie comprenant :
une pluralité de plaques séparées (10), dans lequel chacune des plaques (10) présente une première surface et une seconde surface opposée, dans lequel la première surface présente une première pluralité de rainures (28) formées dans celle-ci, et dans lequel
un plénum d'entrée (26) est conçu pour recevoir un fluide caloporteur provenant d'une source et distribuer le fluide caloporteur à travers les rainures (28) ; et
un plénum de sortie (26) est conçu pour recevoir le fluide caloporteur provenant des rainures (28) et distribuer le fluide caloporteur vers une destination de retour,
dans lequel chaque rainure (28) s'étend d'un premier bord d'une plaque respective (10) de la pluralité de plaques séparées (10) disposées plus près du plénum d'entrée (26) vers un second bord opposé disposé plus près du plénum de sortie (26),
chaque plaque (10) est formée à partir d'un matériau en béton,
et la seconde surface présente :
aucune rainure formée dans celle-ci ; ou
une seconde pluralité de rainures (28) formées dans celle-ci ;
dans lequel la première surface d'une première plaque (10) de la pluralité de plaques séparées (10) est disposée en contact direct avec la seconde surface d'une seconde plaque adjacente (10) de la pluralité de plaques séparées (10) pour définir une pluralité de voies d'écoulement (12) entre la première plaque (10) et la seconde plaque (10) pour le fluide caloporteur, dans lequel la tuyauterie est exclue des voies d'écoulement (12) ; et
dans lequel une partie de la chaleur dans fluide caloporteur est transférée aux plaques (10) dans un mode de fonctionnement de charge lorsque le fluide caloporteur peut être transmis le long des rainures (28) ou une partie de la chaleur des plaques (10) peut être transférée au fluide caloporteur dans un mode de fonctionnement de décharge lorsque le fluide caloporteur est transmis le long des rainures (28) ;
**caractérisé en ce que**
chaque rainure (28) présente généralement la forme d'un segment circulaire lorsqu'elle est observée le long de chaque rainure (28).

2. Dispositif de stockage d'énergie selon la revendication 1, dans lequel la pluralité de plaques séparées (10) sont agencées en une pile verticale avec les premières surfaces et les secondes surfaces disposées horizontalement.

3. Dispositif de stockage d'énergie selon la revendication 1, dans lequel la pluralité de plaques séparées (10) sont agencées verticalement sur le bord, avec les premières surfaces et les secondes surfaces disposées verticalement.

4. Dispositif de stockage d'énergie selon la revendication 1, dans lequel chaque plaque (10) présente une épaisseur comprise entre environ 12,5 mm (0,5 pouces) et environ 150 mm (6 pouces).

5. Dispositif de stockage d'énergie selon la revendication 4, dans lequel chaque plaque (10) présente une épaisseur d'environ 100 mm (4 pouces).

6. Dispositif de stockage d'énergie selon la revendication 1, dans lequel chaque rainure (28) présente une profondeur d'environ 6,25 mm (0,25 pouces) à environ 25 mm (1 pouce).

7. Dispositif de stockage d'énergie selon la revendication 6, dans lequel chaque rainure (28) présente une largeur d'environ 12,5 mm (0,5 pouces) à environ 62,5 mm (2,5 pouces) et est séparée des rainures adjacentes (28) par une distance de séparation d'environ 6,25 mm (0,25 pouces) à environ 50 mm (2 pouces).

8. Dispositif de stockage d'énergie selon la revendication 1, dans lequel le dispositif de stockage d'énergie est configuré pour fonctionner approximativement entre 60° C (140° F) et 315° C (600° F).

9. Dispositif de stockage d'énergie selon la revendication 1, dans lequel les plaques (10) comprennent des micro-barres d'armature ou d'autres renforts tridimensionnels.

10. Procédé de stockage d'énergie thermique comprenant :
la formation d'un dispositif de stockage d'énergie selon la revendication 1 ;
l'orientation d'un fluide caloporteur du plénum d'entrée (26) à travers la pluralité de rainures (28) de la pluralité de plaques séparées (10) vers le plénum de sortie (26) ;
le transfert de la chaleur provenant du fluide caloporteur à la pluralité de plaques séparées (10) dans un mode de fonctionnement de charge ou le transfert de la chaleur provenant de la pluralité de plaques séparées (10) au fluide caloporteur dans un mode de fonctionnement de décharge ; et
la sortie du fluide caloporteur provenant du plénum de sortie (26).

11. Procédé selon la revendication 10 comportant l'étape consistant à faire fonctionner le module de transfert de chaleur approximativement entre 60° C (140° F) et 315° C (600° F).

12. Procédé selon la revendication 10 dans lequel le mode de fonctionnement de charge, dans lequel la chaleur est transférée du fluide caloporteur à la pluralité de plaques séparées (10), et le mode de fonctionnement de décharge, dans lequel la chaleur est transférée de la pluralité de plaques séparées (10) au fluide caloporteur, sont respectivement effectués dans des directions opposées d'écoulement de fluide, ce qui équivaut à un fonctionnement d'un échangeur de chaleur à contre-courant.
